# EUROPEAN PATENT SPECIFICATION

(11) **EP 2 107 769 B1**
(45) Date of publication and mention of the grant of the patent: **10.05.2017**
(21) Application number: 08075265.2
(22) Date of filing: 31.03.2008
(51) Int. Cl.: H04L 29/06

(54) **TRANSMISSION OF DATA**
ÜBERTRAGUNG VON DATEN
TRANSMISSION DE DONNÉES

(43) Date of publication of application: 07.10.2009
(73) Proprietor: Vodafone Holding GmbH, 40213 Düsseldorf (DE)
(72) Inventor: Hoeksel, Sebastiaan, 6229 VN Maastricht (NL); van Muijen, Robert, 3665 AS (BE)
(74) Representative: Weisbrodt, Bernd

(56) References cited:
- EP-A- 1 001 348
- EP-A- 1 244 258
- SARVAS R ET AL: "Metadata Creation System for Mobile Images" MOBISYS 2004. THE 2ND INTERNATIONAL CONFERENCE ON MOBILE SYSTEMS, APPLICATIONS AND SERVICES. BOSTON, MA, JUNE 6 - 9, 2004; [INTERNATIONAL CONFERENCE ON MOBILE SYSTEMS, APPLICATIONS AND SERVICES], NEW YORK, NY : ACM, US, vol. CONF. 2, 6 June 2004 (2004-06-06), pages 36-48, XP002393963 ISBN: 978-1-58113-793-4

## Description

The present invention relates to a method for at least partially automatically transmitting data between a data storage device and a node in a communication network using a mobile device being operable in a mobile network, where data stored on the part of a data storage device are at least partially received from the mobile device by using a wireless communication connection between a transceiver device of the mobile device and a transceiver device of the data storage device, which transceiver devices enable a corresponding wireless communication connection, and received data is transmitted from the mobile device to the node in the communication network by using the mobile network.

In addition the present invention relates to a data storage device with at least one storage area for storing data and a transceiver device enabling a wireless communication connection, characterized in that said data storage is developed and/or set up to at least partially execute a method according the present invention.

An additional subject of the present invention is a mobile device for usage in a mobile network, especially a mobile network according to a GSM-, GPRS-and/or UMTS-cellular network standard, comprising a transceiver device allowing a wireless communication connection, characterized in that said mobile device is developed and/or set up to at least partially execute a method according to the present invention, preferably in the context of a data storage device according to the present invention.

Furthermore subject of the present invention is a node in a mobile network, particularly in a mobile network according to GSM-, GPRS-, and/or UMTS-cellular network standard, which participates in transmitting data, characterized in that said node is developed and/or set up to at least partially execute a method according to the present invention, especially in the context with a mobile device according to the present invention.

US 2007/0073937 A1 and US 2005/0033848 A1 disclose data storage devices, especially according the so called SD-format respectively SD-standard (SD: Secure Digital), having a transceiver device for a wireless communication connection according to IEEE 802.11 - so called WLAN (WLAN: Wireless LAN; LAN: Local Area Network) - respectively according to Bluetooth. The transceiver device of such data storage device is especially used for uploading data stored on the part of the data storage device - for example digital pictures done with a digital camera - to a device - especially a PC (PC: Personal Computer) or a so called Remote Sharing Server - also having and/or using a transceiver device for a wireless communication connection. US 2005/0033848 A1 disclose an embodiment, where data initially are transmitted from the data storage device to a mobile device operable in a mobile network via Bluetooth. The data are then transmitted from the mobile device to a device in a communication network - especially in a mobile network and/or in the internet - for further usages on part of said device via the mobile network.

EP 1 001 348 A2 discloses a method for data communication such as the transmission of digital pictures between a mobile station and a digital camera wherein the mobile station and the memory card of the digital camera have means for local radio communication such as bluetooth. According to a proposal the mobile station can be used to transmit the pictures through the communication network.

EP 1 224 258 A2 discloses a method for transmitting data from a digital camera to a radio communication apparatus, such as a cellular phone via local radio communication means. Said radio communication apparatus is designed to store the data transmitted by data storing apparatus. Furthermore, said radio communication apparatus is equiped with an email program. The data received by the radio communication apparatus can be attached to an email in order to send this data to a server using the public network.

The solutions known so far have different drawbacks. For instance so called hotspots, which enable a wireless internet access via WLAN or suchlike standard, are not area-wide present. Thus data transmission, especially a so called Instant Sharing of digital pictures, is not always and every where possible. In addition users normally don't trust public hotspots and also can't trust that data is transmitted to a Sharing Server in fact.

Devices using data storage devices for storage data, especially digital cameras and/or suchlike devices, for example so called mp3-players, normally have no user interface respectively interface which enables a transmission of data complying the users requirements concerning user individual data transmission respectively a data transmission which is adapted to user preferences and/or user needs or a data transmission taking into account the requirements of specific situations.

Data storage devices for storing data usually don't have an own power supply. The power needed for storing data is normally provided from and/or by the device using the data storage device. In doing so the data storage device normally is power supplied only to and/or for certain actions. Thus a digital camera for example enables a power supply only for a specific period after exposure of a picture. The period of the disposed power supply is normally not long enough for data transmission and in addition cause, that data transmission has to occur directly after exposure of a picture.

Due to the relatively badly power supply and also due to the normally absent user interface for especially user individual transmission of data respectively a transmission of data which is adapted to user preferences and/or needs or suchlike transmission of data, are further processes of data on the part of the data storage devices not possible respectively only constricted possible, especially since such processes, for example digital image processing, are normally associated with higher power consumption.

In view of this state of the art, it is object of the present invention to improve the inventive transmission of data, especially in view of both handling and stronger consideration of user individual preferences and/or requirements of specific situations.

To achieve this object technically, the present invention suggests a methods as defined in claim 1 and a system defined in claim 11. The invention is based on the finding, that an improved transmission of data can be achieved, particularly with regard to handling and consideration of user individual preferences and/or requirements of specific situations, if processed data is used according the present invention. The inventive usage of processed data facilitates an improved handling and also allows an at least semi-automatic consideration of user individual preferences and/or requirements of specific situations. User individual preferences are preferably stored on the part of the mobile device and/or on the part of the mobile network. Requirements of specific situations preferably comprise user individual situations - for example settings of the mobile device during a meeting or suchlike situations - and situations concerning the possibility and/or quality of radio reception - for example disturbances in radio reception in the mobile network and suchlike situations.

An advantageous embodiment is characterized in that said data are at least partially edited, modified, transformed, packed respectively compressed, unpacked respectively uncompressed and/or provided with additional information within the data processing.

Another advantageous embodiment is characterized in that said data, especially the processed data, are stored on the part of a data storage of the mobile device, on the part of the data storage device, on the part of a data storage of the node and/or on the part of a data storage device being accessible over said node on the part of the communication network. The different storage possibilities allow preferably a further improvement concerning handling and consideration of specific situations, especially since the stored data is usable for further inventive uses.

A further advantageous embodiment is characterized in that within the data processing packed respectively compressed data are transmitted to the node within a dialogue between the mobile device and the node using the mobile network, where at least a part of the data is chosen and subsequent data according to the selection are transmitted unpacked respectively uncompressed to the node. This provides an advantageously improvement, especially since during the dialog only packed respectively compressed data have to be handled.

In a preferred embodiment on the part of the data storage device stored data are advantageously processed by an administration-application executed on the part of the mobile device via the wireless communication connection between the data storage device and the mobile device. The algorithm of the administration-application executable on part of the mobile device is preferably stored on the part of the data storage device and is received by the mobile device via the wireless communication connection between the mobile device and the data storage device. Another embodiment suggests that the algorithm of the administration-application executable on part of the mobile device is stored on the part of a data storage device being accessible over the node on the part of the communication network and is received by the mobile device via the mobile network. A further preferred embodiment is characterized in that the algorithm is automatically received by the mobile device, wherein particularly device specific properties and/or functionalities are regarded.

A further, particularly advantageous embodiment is characterized in that on the part of a data storage of the node or on the part of a data storage device being accessible over the node data stored on the part of the communication network are chosen in the context of a dialogue between the mobile device and the node respectively the mobile device and the data storage device, said dialog using the mobile network, the chosen data are received by the mobile device using the mobile network and are transmitted from the mobile device to the data storage device using a wireless communication connection between the mobile device and the data storage device.

The data preferably are signalized on the part of an information device - for example a display and/or a speaker of the mobile device - of the mobile device especially within an administration application and/or the administration application executed by the mobile device.

Another advantageous embodiment is characterized by a usage and or determination of at least one attribute of at least one part of the data as additional information, particularly comprising information of time, information of location, information of utilization and/or suchlike information. This provides advantageously a further improvement, especially concerning consideration of specific situations with the additional information.

A further embodiment is characterized by a wireless communication connection according to a Bluetooth-standard.

The data preferably represent digital image- and/or sound-information, especially in form of digital photographs.

Another subject of the description is a data storage device with at least one storage area for storing data and a transceiver device enabling a wireless communication connection.

A further embodiment is characterized in that on the part of a storage area for storing data an algorithm based on an administration application which is executable on the part of the mobile device is stored.

Another preferred embodiment is characterized in that the administration-application offers the possibility for processing data, especially with regard to editing, modifying, transforming, packing respectively compressing, unpacking respectively uncompressing and/or fitting additional information to the data, especially information regarding time, location and/or utilization.

The transceiver device is preferably a transceiver device allowing a wireless communication connection according to a Bluetooth-standard.

The storage area is advantageously realized by the use of at least one flash-memory.

Another preferred embodiment is characterized in that it is card-shaped, particularly designed of a format according to Secure Digital (SD), Multi Media Card (MMC), Compact Flash (CF), Memory Stick (MS), Smart Media Card (MMD), xD Picture Card (xD) or Universal Flash Storage (USF).

A further subject of the description is a mobile device for usage in a mobile network, especially a mobile network according to a GSM-, GPRS-and/or UMTS-cellular network standard comprising a transceiver device allowing a wireless communication connection.

The mobile device is preferably characterized by an administration application executable on the part of the mobile device. A further advantageously embodiment is characterized in that the algorithm based on the administration-application which is executable on part of the mobile device is stored on the part of a data storage of the mobile device.

The administration application advantageously offers the possibility to process data, especially with regard to editing, modifying, transforming, packing respectively compressing, unpacking respectively uncompressing and/or fitting additional information to the data, especially information regarding time, location and/or utilization.

The transceiver device of the mobile device is preferably a transceiver device allowing a wireless communication connection according to a Bluetooth-standard.

Another subject of the description is a node in a communication network, particularly in a mobile network according to GSM-, GPRS-, and/or UMTS-cellular network standard, which participates in transmitting data.

In further preferred embodiments the mobile device (handset) is used as a communication respectively as a processing hub between a digital camera and a remote sharing server.

The data storage device, preferred in a SD-card format respectively standard, comprises of non-volatile reprogrammable memory for storage of the pictures exposed with the camera, a bus/memory controller (SD-bus/memory controller), a local micro controller and a wireless local radio maintaining a continuous link with the handset.

The handset comprises a software client that maintains the wireless link with the data storage device (SD card) and establishes a connection with the remote picture server via the cellular network.

The invention and architecture allows for:
1. modifying or processing the picture taken by the camera by the handset as being a computing platform. The handset can add GPS (location) data where the picture has been taken, add time of day, adapt/remove red eye effect on the picture, add personal data to the file, compress the file to a more suitable size to be viewed on the handset or watermark the file.
2a. modifying the settings or contents of the SD card via a client that resides on the handset. The user interface or feedback for these actions for the camera is done by displaying pictures on the camera-screen which are generated by the SD card itself or downloaded to the SD card from the handset.
2b. Generation of pictures by the SD card that are displayed on the camera. The user can in return respond to this by for example deleting a picture form the card when proposed by the SD card.
3a. Downloading the specific client software stored in the network dedicated for the specific handset to the handset.
3b. Downloading the specific client software pre-stored in the SD card over the local radio connection to the handset.
4 Real-time upload of pictures to a remote server instead of waiting for the opportunity to have local network access.
5 (Real-time) back-up of pictures taken on a remote server.
6 User selection on the handset of the picture(s) that needs to be uploaded from the camera to the remote server.
7 User selection on the handset for downloading the high-resolution picture from the server to a PC or handset.

Additional details, features and advantages are presented in greater detail hereafter in the context which follows with reference to the illustrative embodiment shown in the drawing, in which:

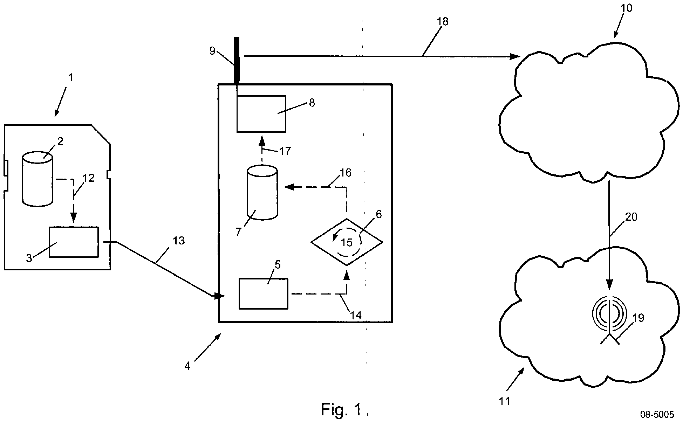

- Fig. 1: shows an illustrative embodiment of a data transmission according to the invention in a basic schematic diagram.

Fig. 1 shows a data storage device 1 having a data storage 2 for storing data and a transceiver device 3 enabling a wireless communication connection. In the present embodiment the data storage device 1 is accordant a SD-card form format respectively standard and the transceiver device 3 enables a communication connection accordant a Bluetooth-standard. The data storage 2 is connected with the transceiver device 3 for transmitting data stored on the part of the data storage 2 with the transceiver device 3 via a wireless communication connection. Transmission of data from the storage area 2 to the transceiver device 3 is in the present case represented symbolically by the interrupted line designated with reference 12.

Fig. 1 further shows a mobile device 4 for usage in a mobile network 10 according to a GSM-, GPRS- and/or UMTS-cellular network standard. The mobile device 4 is a handset in form of a telephone, having - in Fig. 1 not explicit shown - units for signaling information in optical and or acoustic manner, for example with a display and/or speakers. The mobile device 4 comprises a transceiver device 5 enabling respectively allowing a wireless communication connection, a processing unit 6 for processing data, a data storage 7 for storing data and a transceiver device 8 with an antenna 9 enabling respectively allowing a wireless communication connection according to a GSM-, GPRS- and/or UMTS-cellular network standard within the mobile network 10. The transceiver device 5 is connected with the processing unit 6. Transmission of data from the transceiver device 5 to the processing unit 6 is in the present case represented symbolically by the interrupted line designated with reference 14. The processing unit 6 processes received data, in which processing data are at least partially edited, modified, transformed, packed respectively compressed, unpacked respectively uncompressed and/or provided with additional information within the data processing. The processing of data (data processing) within the processing unit 6 is in the present case represented symbolically by the interrupted line designated with reference 15. In the present embodiment the processing unit 6 is connected with the data storage 7. Transmission of data from the processing unit 6 to the data storage 7 is in the present case represented symbolically by the interrupted line designated with reference 16. The data storage 7 is connected with the transceiver device 8 for transmitting data stored on the part of the data storage 7 with the transceiver device 8 Transmission of data from the storage area 7 to the transceiver device 8 is in the present case represented symbolically by the interrupted line designated with reference 17.

The mobile network 10 is presently connectable with a communication network 11, in the present case the internet, having network nodes. In Fig. 1 a network node is represented symbolically with reference 19. The node 19 is arranged within the communication network 11 (internet). It is also possible, that the node 19 is arranged within the mobile network 10 or any other communication network, connectable with the mobile network 10. The connection between the mobile network 10 and the communication network 11 is done via a gateway between the respective networks (not separately shown in Fig. 1).

Data stored on the part of the storage area 2 of the data storage device 1 are transmitted automatically to the transceiver device 3 for transmitting to the mobile device 4. Data is then received from the mobile device 4 by using the wireless communication connection 13 between the transceiver device 5 of the mobile device 4 and the transceiver device 3 of the data storage device 1. Received data is then transmitted to the processing unit 6 via transmission 14 between the transceiver device 5 and the processing unit 6. The data is then processed within the processing unit 6, in which processing 15 data are at least partially edited, modified, transformed, packed respectively compressed, unpacked respectively uncompressed and/or provided with additional information within the data processing. After processing 15 processed data is transmitted (reference 16) to and stored within the storage area 7. Data stored on the part of the storage area 7 of the mobile device 4 are transmitted to the transceiver device 8 for transmitting to node 19 within the communication network 11 via the mobile network 10 using the mobile network connection 18 between the mobile device 4 and the mobile network 10 and the connection 20 between the mobile network 10 and the communication network 11.

The described embodiments and the embodiments illustrated in connection with the figure serve only to explain the invention and are not restrictive with respect to it.

### List of reference designations:

- 1: data storage device (SD-card format)
- 2: data storage (flash memory)
- 3: transceiver (Bluetooth)
- 4: mobile device (handset)
- 5: transceiver (Bluetooth)
- 6: processing unit
- 7: data storage (flash memory)
- 8: transceiver (GSM/GPRS/UMTS)
- 9: antenna (transceiver (8))
- 10: mobile network
- 11: communication network (Internet)
- 12: transmission data (data storage (2) => transceiver (3))
- 13: transmission data (transceiver (3) => transceiver (5))
- 14: transmission data (transceiver (5) => processing unit (6))
- 15: processing data (processing unit (6))
- 16: transmission data (processing unit (6) => data storage (7))
- 17: transmission data (data storage (7) => transceiver (8))
- 18: transmission data (transceiver (8) => mobile network (10))
- 19: node (communication network (11)
- 20: transmission data (mobile network (10) => node (19))

## Claims

1. Method for at least partially automatically transmitting data between a first data storage device (1)
usable by an electronic device from which power supply is provided to the data storage device (1)
and a node (19) in a communication network (11)
using a mobile device (4) being operable in a mobile network (10),
where
data stored on the part of the first data storage device (1) are at least partially received
by the mobile device (4)
by using a wireless communication connection
between
a transceiver device (5) of the mobile device (4) and a transceiver device (3) of the first data storage device (1),
which transceiver devices (3, 5) enable a corresponding wireless communication connection,
**characterized**
**in that**
the data received by using the wireless communication connection are processed on the part of the mobile device (4),
**in that**
the processed data are transmitted from the mobile device (4) to the node (19) in the communication network (11) by using the mobile network (10), and
**in that**
on the part of the first data storage device (1) stored data are processed by an administration-application executed on the part of the mobile device (4) via the wireless communication connection between the first data storage device (1) and the mobile device (4) and
the algorithm of the administration-application executable on part of the mobile device (4) is stored on the part of the first data storage device (1) and is received by the mobile device (4) via the wireless communication connection between the mobile device (4) and the first data storage device (1).

2. Method according to claim 1, **characterized in that** within the data processing (15) said data are at least partially edited, modified, transformed, packed respectively compressed, unpacked respectively uncompressed and/or provided with additional information.

3. Method according to claim 1 or 2, **characterized in that** said processed data, are stored on the part of a data storage (7) of the mobile device (4), on the part of the data storage device (1), on the part of a data storage of the node (19) and/or on the part of a data storage device being accessible over said node (11) on the part of the communication network (11).

4. Method according to one of the claims 1 to 3, **characterized in that** within the data processing (15) packed respectively compressed data are transmitted to the node (19) within a dialogue between the mobile device (4) and the node (19) using the mobile network (10), where at least a part of the data is chosen and subsequent data according to the selection are transmitted unpacked respectively uncompressed to the node (11).

5. Method according to one of the claims 1 to 4, **characterized in that** the algorithm is automatically received by the mobile device (4), wherein particularly device specific properties and/or functionalities are regarded.

6. Method according to claims 1 to 5, **characterized in that** on the part of a data storage of the node (19) or on the part of a data storage device being accessible over the node (19) data stored on the part of the communication network (11) are chosen in the context of a dialogue between the mobile device (4) and the node (19) respectively the mobile device (4) and the data storage device, said dialog using the mobile network (10), the chosen data are received by the mobile device (4) using the mobile network (10) and are transmitted from the mobile device (4) to the data storage device using a wireless communication connection between the mobile device (4) and the data storage device.

7. Method according to one of the claims 1 to 6, **characterized in that** the data are signalized on the part of an information device of the mobile device (4) especially within an administration application and/or the administration application executed by the mobile device (4).

8. Method according to one of the claims 2 to 7, **characterized by** a usage and or determination of at least one attribute of at least one part of the data as additional information, particularly comprising information of time, information of location, information of utilization and/or suchlike information.

9. Method according to one of the claims 1 to 8, **characterized by** a wireless communication connection according to a Bluetooth-standard.

10. Method according to one of the claims 1 to 9, **characterized in that** the data represent digital image- and/or sound-information, especially in form of digital photographs.

11. System for at least partially automatically transmitting data comprising:
a first data storage device (1) usable by an electronic device from which power supply is provided to the data storage device (1) with at least one storage area (2) for storing data and a transceiver device (3) enabling a wireless communication connection;
a node (19) in a communication network (11);
a mobile device (4) configured for usage in a mobile network (10), especially a mobile network (10) according to a GSM-, GPRS- and/or UMTS-cellular network standard, comprising a transceiver device (5) allowing a wireless communication connection, the mobile device (4) being configured for at least partially receiving data stored on the part of the first data storage device (1) by using a wireless communication connection between the transceiver device (5) of the mobile device (4) and the transceiver device (3) of the first data storage device (1), and **characterized by** the system being configured for processing stored data on the part of the first storage device (1) by an administration-application executed on the part of the mobile device (4) via the wireless communication connection between the first data storage device (1) and the mobile device (4), executing the algorithm of the administration-application on the part of the mobile device (4), whereby the algorithm of the administration-application is stored on the part of the first data storage device (1) and is received by the mobile device (4) via the wireless communication connection between the mobile device (4) and the first data storage device(1) and
transmitting the processed data from the mobile device (4) to the node (19) in the communication network (11) by using the mobile network (10).

12. System according to claim 11, **characterized in that** the administration-application offers the possibility for processing data, especially with regard to editing, modifying, transforming, packing respectively compressing, unpacking respectively uncompressing and/or fitting additional information to the data, especially information regarding time, location and/or utilization.

13. System according to claim 11 or claim 12, **characterized in that** the transceiver device (3) is a transceiver device (3) allowing a wireless communication connection according to a Bluetooth-standard.

14. System according to one of the claims 11 to 13, **characterized in that** the storage area (2) is realized by the use of at least one flash-memory.

15. System according to one of the claims 12 to 14, **characterized in that** it is card-shaped, particularly designed of a format according to Secure Digital (SD), Multi Media Card (MMC), Compact Flash (CF), Memory Stick (MS), Smart Media Card (MMD), xD Picture Card (xD) or Universal Flash Storage (USF).

16. System according to one of the claims 11 to 15, **characterized in that** the algorithm based on the administration-application which is executable on part of the mobile device (4) is stored on the part of a data storage (7) of the mobile device (4).

17. System according to one of the claims 11 to 16, **characterized in that** the administration application offers the possibility to process data, especially with regard to editing, modifying, transforming, packing respectively compressing, unpacking respectively uncompressing and/or fitting additional information to the data, especially information regarding time, location and/or utilization.

18. System according to one of the claims 11 to 17, **characterized in that** the transceiver device (5) is a transceiver device (5) allowing a wireless communication connection according to a Bluetooth-standard.

## Patentansprüche

1. Verfahren zur zumindest teilweise automatischen Übermittlung von Daten zwischen einer ersten Datenspeichervorrichtung (1),
die durch eine elektronische Vorrichtung nutzbar ist, welche die Datenspeichervorrichtung (1) mit Energie versorgt,
und einem Netzknoten (19) in einem Kommunikationsnetz (11) unter Verwendung einer in einem Mobilfunknetz (10) betreibbaren mobilen Vorrichtung (4),
wobei
seitens der ersten Datenspeichervorrichtung (1) gespeicherte Daten zumindest teilweise von der mobilen Vorrichtung (4) empfangen werden unter Nutzung einer drahtlosen Kommunikationsverbindung zwischen
einer Sender-Empfänger-Vorrichtung (5) der mobilen Vorrichtung (4) und einer Sender-Empfänger-Vorrichtung (3) der ersten Datenspeichervorrichtung (1),
wobei die Sender-Empfänger-Vorrichtungen (3, 5) eine entsprechende drahtlose Kommunikationsverbindung ermöglichen,
**dadurch gekennzeichnet,**
**dass**
die unter Nutzung der drahtlosen Kommunikationsverbindung empfangenen Daten seitens der mobilen Vorrichtung (4) verarbeitet werden,
**dass**
die verarbeiteten Daten von der mobilen Vorrichtung (4) an den Netzknoten (19) in dem Kommunikationsnetz (11) unter Nutzung des Mobilfunknetzes (10) übertragen werden, und
**dass**
seitens der ersten Datenspeichervorrichtung (1) gespeicherte Daten durch eine Verwaltungsanwendung verarbeitet werden, die seitens der mobilen Vorrichtung (4) über die drahtlose Kommunikationsverbindung zwischen der ersten Datenspeichervorrichtung (1) und der mobilen Vorrichtung (4) ausgeführt wird und
der seitens der mobilen Vorrichtung (4) ausführbare Algorithmus der Verwaltungsanwendung seitens der ersten Datenspeichervorrichtung (1) gespeichert und von der mobilen Vorrichtung (4) über die drahtlose Kommunikationsverbindung zwischen der mobile Vorrichtung (4) und der ersten Datenspeichervorrichtung (1) empfangen wird.

2. Verfahren nach Anspruch 1, **dadurch gekennzeichnet, dass** im Rahmen der Datenverarbeitung (15) die Daten zumindest teilweise editiert, modifiziert, transformiert, gepackt beziehungsweise komprimiert, entpackt beziehungsweise entkomprimiert und/oder mit zusätzlichen Informationen versehen werden.

3. Verfahren nach Anspruch 1 oder Anspruch 2, **dadurch gekennzeichnet, dass** die verarbeiteten Daten seitens eines Datenspeichers der mobilen Vorrichtung (4), seitens der Datenspeichervorrichtung (1), seitens eines Datenspeichers des Netzknotens (19) und/oder seitens einer Datenspeichervorrichtung, die über den Netzknoten (11) seitens des Kommunikationsnetzwerks (11) zugänglich ist, gespeichert werden.

4. Verfahren nach einem der Ansprüche 1 bis 3, **dadurch gekennzeichnet, dass** innerhalb der Datenverarbeitung (15) gepackte beziehungsweise komprimierte Daten an den Netzknoten (19) innerhalb eines Dialoges zwischen der mobilen Vorrichtung (4) und dem Netzknoten (19) unter Nutzung des Mobilfunknetzes (10) übertragen werden, wobei zumindest ein Teil der Daten ausgewählt und nachfolgend Daten gemäß der Auswahl entpackt beziehungsweise entkomprimiert an den Netzknoten (11) übertragen werden.

5. Verfahren nach einem der Ansprüche 1 bis 4, **dadurch gekennzeichnet, dass** der Algorithmus automatisch von der mobilen Vorrichtung (4) empfangen wird, wobei insbesondere vorrichtungsspezifische Eigenschaften und/oder Funktionalitäten beachtet werden.

6. Verfahren nach den Ansprüchen 1 bis 5, **dadurch gekennzeichnet, dass** seitens eines Datenspeichers des Netzknotens (19) oder seitens einer über den Netzknoten (19) zugänglichen Datenspeichervorrichtung seitens des Kommunikationsnetzwerks (11) gespeicherte Daten im Kontext eines Dialogs zwischen der mobilen Vorrichtung (4) und dem Netzknoten (19) beziehungsweise zwischen der mobilen Vorrichtung (4) und der Datenspeichervorrichtung ausgewählt werden, wobei der Dialog das Mobilfunknetz (10) nutzt, die ausgewählten Daten von der mobilen Vorrichtung (4) unter Nutzung des Mobilfunknetzes (10) empfangen und von der mobilen Vorrichtung (4) an die Datenspeichervorrichtung unter Nutzung einer drahtlosen Kommunikationsverbindung zwischen der mobilen Vorrichtung (4) und der Datenspeichervorrichtung übertragen werden.

7. Verfahren nach einem der Ansprüche 1 bis 6, **dadurch gekennzeichnet dass** die Daten seitens einer Informationsvorrichtung der mobilen Vorrichtung (4) insbesondere innerhalb einer Verwaltungsanwendung und/oder der von der mobilen Vorrichtung (4) ausgeführten Verwaltungsanwendung signalisiert werden.

8. Verfahren nach einem der Ansprüche 2 bis 7, **gekennzeichnet durch** eine Nutzung und/oder Bestimmung wenigstens eines Attributs wenigstens eines Teils der Daten als Zusatzinformationen, welche insbesondere Zeitinformationen, Ortsinformationen, Nutzungsinformationen und/oder dergleichen Informationen umfassen.

9. Verfahren nach einem der Ansprüche 1 bis 8, **gekennzeichnet durch** eine drahtlose Kommunikationsverbindung gemäß einem Bluetooth-Standard.

10. Verfahren nach einem der Ansprüche 1 bis 9, **dadurch gekennzeichnet, dass** die Daten digitale Bild- und/oder Toninformationen, insbesondere in Form digitaler Photographien darstellen.

11. System zur zumindest teilweise automatischen Übertragung von Daten, aufweisend:
eine erste Datenspeichervorrichtung (1), die durch eine elektronische Vorrichtung nutzbar ist, welche die Datenspeichervorrichtung (1) mit Energie versorgt, mit zumindest einem Speicherbereich (2) zum Speichern von Daten und eine Sender-Empfänger-Vorrichtung (3), welche eine drahtlose Kommunikationsverbindung ermöglicht;
einen Netzknoten (19) in einem Kommunikationsnetz (11);
eine mobile Vorrichtung (4), die für die Nutzung in einem Mobilfunknetz (10), insbesondere einem Mobilefunknetz (10) gemäß einem GSM, GPRS und/oder UMTS zellularen Netzwerkstandard eingerichtet ist, mit einer Sender-Empfänger-Vorrichtung (5), die eine drahtlose Kommunikationsverbindung ermöglicht,
wobei die mobile Vorrichtung (4) dafür ausgebildet ist, zumindest teilweise seitens der ersten Datenspeichervorrichtung (1) gespeicherte Daten unter Nutzung einer drahtlosen Kommunikationsverbindung zwischen der Sender-Empfänger-Vorrichtung (5) der mobile Vorrichtung (4) und der Sender-Empfänger-Vorrichtung (3) der ersten Datenspeichervorrichtung (1) zu empfangen,
und **dadurch gekennzeichnet, dass** das System dafür ausgebildet ist, seitens der ersten Datenspeichervorrichtung (1) gespeicherte Daten mittels einer Verwaltungsanwendung zu verarbeiten, die seitens der mobilen Vorrichtung (4) über die drahtlose Kommunikationsverbindung zwischen der ersten Datenspeichervorrichtung (1) und der mobilen Vorrichtung (4) ausgeführt wird, und den Algorithmus der Verwaltungsanwendung seitens der mobilen Vorrichtung (4) auszuführen, wobei der Algorithmus der Verwaltungsanwendung seitens der ersten Datenspeichervorrichtung (1) gespeichert und von der mobilen Vorrichtung (4) über die drahtlose Kommunikationsverbindung zwischen der mobile Vorrichtung (4) und der ersten Datenspeichervorrichtung (1) empfangen wird, und
die verarbeiteten Daten von der mobilen Vorrichtung (4) an den Netzknoten (19) in dem Kommunikationsnetz (11) unter Verwendung des Mobilfunknetzes (10) zu übertragen.

12. System nach Anspruch 11, **dadurch gekennzeichnet, dass** die Verwaltungsanwendung die Möglichkeit bietet, Daten zu verarbeiten, insbesondere bezüglich Editieren, Modifizieren, Transformieren, Packen beziehungsweise Komprimieren, Entpacken beziehungsweise Entkomprimieren und/oder Anpassen zusätzlicher Informationen an die Daten, insbesondere Informationen bezüglich Zeit, Ort und/oder Nutzung.

13. System nach Anspruch 11 oder Anspruch 12, **dadurch gekennzeichnet, dass** die Sender-Empfänger-Vorrichtung (3) eine Sender-Empfänger-Vorrichtung (3) ist, welche eine drahtlose Kommunikationsverbindung gemäß einem Bluetooth-Standard ermöglicht.

14. System nach einem der Ansprüche 11 bis 13, **dadurch gekennzeichnet, dass** der Speicherbereich (2) durch die Verwendung zumindest eines Flash-Speichers realisiert ist.

15. System nach einem der Ansprüche 12 bis 14, **dadurch gekennzeichnet, dass** es kartenförmig und insbesondere in einem Format gemäß einer sicheren digitalen Speicherkarte (SD), Multi-Media-Karte (MMC), Compact-Flash-Karte (CF), eines Memory-Sticks (MS), einer Smart Media-Karte (MMD), xD-Picture-Karte (xD) oder eines Universal Flash Storage (UFS) ausgebildet ist.

16. System nach einem der Ansprüche 11 bis 15, **dadurch gekennzeichnet, dass** der Algorithmus, der auf der Verwaltungsanwendung basiert, welche seitens der mobilen Vorrichtung (4) ausführbar ist, seitens eines Datenspeichers (7) der mobilen Vorrichtung (4) gespeichert wird.

17. System nach einem der Ansprüche 11 bis 16, **dadurch gekennzeichnet, dass** die Verwaltungsanwendung die Möglichkeit bietet, Daten zu verarbeiten, insbesondere bezüglich Editieren, Modifizieren, Transformieren, Packen beziehungsweise Komprimieren, Entpacken beziehungsweise Entkomprimieren und/oder Anpassen zusätzlicher Informationen an die Daten, insbesondere Informationen bezüglich Zeit, Ort und/oder Nutzung.

18. System nach einem der Ansprüche 11 bis 17, **dadurch gekennzeichnet, dass** die Sender-Empfänger-Vorrichtung (5) eine Sender-Empfänger-Vorrichtung (5) ist, welche eine drahtlose Kommunikationsverbindung gemäß einem Bluetooth-Standard ermöglicht.

## Revendications

1. Procédé de transmission de données au moins partiellement automatique entre un premier dispositif de stockage de données (1)
utilisable par un dispositif électronique qui alimente le dispositif de stockage de données (1) en énergie
et un noeud (19) dans un réseau de communication (11) en utilisant un dispositif mobile (4) fonctionnant dans un réseau radio mobile (10),
dans lequel
des données stockées par un premier dispositif de stockage de données (1) sont a moins partiellement reçues
par le dispositif mobile (4)
en utilisant une liaison de communication sans fil
entre
un dispositif émetteur/récepteur (5) du dispositif mobile (5) et un dispositif émetteur/récepteur (3) du premier dispositif de stockage de données (1),
lesquels dispositifs émetteurs/récepteurs (3, 5) permettant d'établir une liaison de communication sans fil correspondante,
**caractérisé**
**en ce que**
les données reçues en utilisant la liaison de communication sans fil sont traitées par le dispositif mobile (4),
**en ce que**
les données traitées sont transmises du dispositif mobile (4) au noeud (19) dans le réseau de communication (11) en utilisant le réseau radio mobile (10),
et
**en ce que**
des données stockées par le premier dispositif de stockage de données (1) sont traitées par une application d'administration exécutée par le dispositif mobile (4) via la liaison de communication sans fil entre le premier dispositif de stockage de données (1) et le dispositif mobile (4) et
l'algorithme de l'application d'administration exécutable par le dispositif mobile (4) est stocké par le premier dispositif de stockage de données (1) et est reçu par le dispositif mobile (4) via la liaison de communication sans fil entre le dispositif mobile (4) et le premier dispositif de stockage de données (1).

2. Procédé selon la revendication 1, **caractérisé en ce que** dans le traitement de données (15) lesdites données sont au moins partiellement éditées, modifiées, transformées, compactées respectivement comprimées, décompactées respectivement décomprimées et/ou munies d'informations supplémentaires.

3. Procédé selon la revendication 1 ou la revendication 2, **caractérisé en ce que** lesdites données traitées sont stockées par un mémoire de données (7) du dispositif mobile (4), par un dispositif de stockage de données (1), par un mémoire de données du noeud (19) et/ou par un dispositif de stockage de données accessible par ledit noeud (19) du réseau de communication (11).

4. Procédé selon l'une des revendications 1 à 3, **caractérisé en ce que** dans le traitement de données (15) des données compactées respectivement comprimées sont transmises au noeud (19) dans un dialogue entre le dispositif mobile (4) et le noeud (19) en utilisant le réseau radio mobile (10), au moins une part des données étant choisie et ensuite des données selon la sélection étant transmises de manière décompactée respectivement décomprimée au noeud (19).

5. Procédé selon l'une des revendications 1 à 4, **caractérisé en ce que** l'algorithme est automatiquement reçu par le dispositif mobile (4), dans lequel notamment des qualités et/ou fonctionnalités spécifiques du dispositif sont considérées.

6. Procédé selon les revendications 1 à 5, **caractérisé en ce que** des données stockées par le réseau de communication sont choisies par un mémoire de données du noeud (19) ou par un dispositif de stockage de données, qui est accessible via le noeud (19), dans le contexte d'un dialogue entre le dispositif mobile (4) et le noeud (19) respectivement entre le dispositif mobile (4) et le dispositif de stockage de données, ledit dialogue utilisant le réseau radio mobile (10), les données choisies sont reçues par le dispositif mobile (4) en utilisant le réseau radio mobile (10) et sont transmises du dispositif mobile (4) au dispositif de stockage de données en utilisant une liaison de communication sans fil entre le dispositif mobile (4) et le dispositif de stockage de données.

7. Procédé selon l'une des revendications 1 à 6, **caractérisé en ce que** les données sont signalées par un dispositif d'informations du dispositif mobile (4), notamment dans une application d'administration et/ou dans l'application d'administration, qui est exécutée par le dispositif mobile (4).

8. Procédé selon l'une des revendications 1 à 7, **caractérisé par** une utilisation et/ou une détermination d'au moins un attribut d'au moins une part des données comme des informations supplémentaires, notamment comprenant des informations de temps, des informations d'emplacement, des informations d'utilisations et/ou des informations similaires.

9. Procédé selon l'une des revendications 1 à 8, **caractérisé par** une liaison de communication sans fil selon un standard Bluetooth.

10. Procédé selon l'une des revendications 1 à 9, **caractérisé en ce que** les données représentent des informations d'image et/ou des informations de son numériques, notamment des informations en forme de photographies numériques.

11. Système de transmission de données au moins partiellement automatique, comprenant:
un premier dispositif de stockage de données (1) utilisable par un dispositif électronique, qui alimente le dispositif de stockage de données (1) en énergie, avec au moins une zone de stockage (2) pour stocker des données et un dispositif émetteur/récepteur (3) permettant d'établir une liaison de communication sans fil;
un noeud (19) dans un réseau de communication (11) ;
un dispositif mobile (4) conçu pour l'utilisation dans un réseau radio mobile (10), notamment un réseau radio mobile (10) selon un standard de réseau cellulaire GSM, GPRS et/ou UMTS, comprenant un dispositif émetteur/récepteur (5) permettant d'établir une liaison de communication sans fil,
le dispositif mobile (4) étant conçu pour recevoir au moins partiellement des données stockées par le premier dispositif de stockage de données (1) en utilisant une liaison de communication sans fil entre le dispositif émetteur/récepteur (5) du dispositif mobile (4) et le dispositif émetteur/récepteur (3) du premier dispositif de stockage de données (1),
et le système étant **caractérisé en ce qu'**il est conçu pour traiter des données stockées par le premier dispositif de stockage de données (1) par moyen d'une application d'administration exécutée par le dispositif mobile (4) via la liaison de communication sans fil entre le premier dispositif de stockage de données (1) et le dispositif mobile (4),
exécuter l'algorithme de l'application d'administration par moyen du dispositif mobile (4), l'algorithme de l'application d'administration étant stocké par le premier dispositif de stockage de données (1) et étant reçu par le dispositif mobile (4) via la liaison de communication sans fil entre le dispositif mobile (4) et le premier dispositif de stockage de données (1) et
transmettre les données traitées du dispositif mobile (4) au noeud (19) dans le réseau de communication (11) en utilisant le réseau radio mobile (10).

12. Système selon la revendication 11, **caractérisé en ce que** l'application d'administration offre la possibilité de traiter des données, notamment de les éditer, modifier, transformer, compacter respectivement comprimer, décompacter respectivement décomprimer et/ou d'adapter des informations supplémentaires aux données, notamment des informations par rapport au temps, à l'emplacement et/ou à l'utilisation.

13. Système selon la revendication 11 ou la revendication 12, **caractérisé en ce que** le dispositif émetteur/récepteur (3) est un dispositif émetteur/récepteur (3) qui permet d'établir une liaison de communication sans fil selon un standard Bluetooth.

14. Système selon l'une des revendications 11 à 13, **caractérisé en ce que** la zone de stockage (2) est réalisée par l'utilisation d'au moins un mémoire Flash.

15. Système selon l'une des revendications 12 à 14, **caractérisé en ce qu'**il est en forme de carte, notamment conçu dans un format de carte numérique sécurisée (SD), de carte multimédia (MMC), de carte Compact Flash (CF), de memory stick (MS), de carte Smart Média (MMD), de carte xD Picture (xD) ou de stockage flash universel (UFS).

16. Système selon l'une des revendications 11 à 15, **caractérisé en ce que** l'algorithme basé sur l'application d'administration, qui est exécutable par le dispositif mobile (4), est stocké par un mémoire de données (7) du dispositif mobile (4).

17. Système selon l'une des revendications 11 à 16, **caractérisé en ce que** l'application d'administration offre la possibilité de traiter des données, notamment de les éditer, modifier, transformer, compacter respectivement comprimer, décompacter respectivement décomprimer et/ou d'adapter des informations supplémentaires aux données, notamment des informations par rapport au temps, à l'emplacement et/ou à l'utilisation.

18. Système selon l'une des revendications 11 à 17, **caractérisé en ce que** le dispositif émetteur/récepteur (5) est un dispositif émetteur/récepteur (5) qui permet d'établir une liaison de communication sans fil selon un standard Bluetooth.
